# FASCICULE DE BREVET EUROPEEN

(11) **EP 1 400 539 B1**
(45) Date de publication et mention de la délivrance du brevet: **03.12.2008**
(21) Numéro de dépôt: 03024852.0
(22) Date de dépôt: 29.01.1999
(51) Int. Cl.: C08F 8/44, C08G 81/00, C08J 5/22

(54) **Procédé de préparation de polymères sulfonés réticulés**
Verfahren zur Herstellung von vernetzten sulfonierten Polymeren
Method for preparing crosslinked sulfonated polymers

(30) Priorité: 30.01.1998 CA 2228467; 28.04.1998 CA 2236197
(43) Date de publication de la demande: 24.03.2004
(62) Demande divisionnaire de: 99902478.9
(73) Titulaire: HYDRO QUEBEC, Montréal H2Z 1A4, Québec (CA)
(72) Inventeur: Michot, Christophe, 38000 Grenoble (FR); Armand, Michel, Montreal, Quebec H3T 1N2 (CA)
(74) Mandataire: Sueur, Yvette

(56) Documents cités:
- EP-A- 0 064 838
- EP-A- 0 275 991
- WO-A-92/17423
- WO-A-95/15351
- WO-A-96/38754
- WO-A-97/09373
- FR-A- 2 749 311

## Description

La présente invention concerne les résines échangeuses d'ions de type cationique, en particulier sous forme membranes, préférablement partiellement ou totalement fluorées, leur applications, en particulier dans les applications électrochimiques comme les piles à combustibles, les procédés chlore-soude, l'électrodialyse, la production d'ozone, les capteurs, de même que toute autre application liée à la dissociation des centres anioniques fixés sur la membrane, tels que la catalyse hétérogène en chimie organique.

À cause de leur inertie chimique, les membranes échangeuses d'ions partiellement ou totalement fluorées sont habituellement choisies dans des procédés chlore-soude ou des piles à combustible consommant de l'hydrogène ou du méthanol. De telles membranes sont disponibles commercialement sous des appellations telles que Nafion™, Flemion™, Dow™. D'autres membranes similaires sont proposées par Ballard Inc. dans la demande WO 97/25369, qui décrit des copolymères de tétrafluoroéthylène et de perfluorovinyléthers ou trifluorovinylstyrène. Les monomères actifs à partir desquels ces copolymères sont obtenus portent des fonctions chimiques qui sont des précurseurs de groupements ioniques de type sulfonate ou carboxylate. Des exemples de ces précurseurs sont: 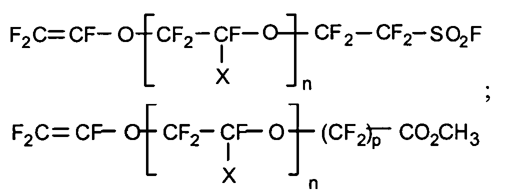 ou 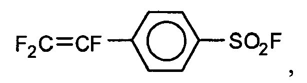 dans lesquels
- X est F, Cl or CF₃;
- n est 0 à 10 inclusivement; et
- p est 1 ou 2;

Les polymères aromatiques de type polyimide ou polyéther sulfone sulfoné ont aussi été envisagés, par exemple 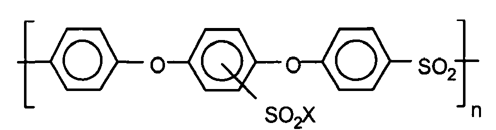 ou

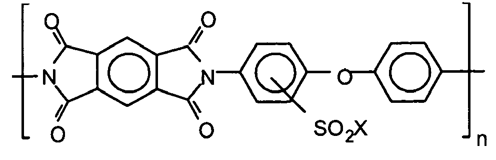

Une fois obtenu, le copolymère contenant les précurseurs précités est moulé, par exemple sous forme de feuilles, puis converti sous forme ionique par hydrolyse pour donner des espèces de type sulfonate ou carboxylate. Le cation associé aux anions sulfonate et carboxylate inclut le proton, le cation d'un métal alcalin (Li⁺, Na⁺, K⁺); le cation d'un métal alcalino-terreux (Mg²⁺, Ca²⁺, Ba²⁺); le cation d'un métal de transition (Zn²⁺, Cu²⁺); Al³⁺; Fe³⁺; le cation d'une terre rare (Sc³⁺, Y³⁺, La³⁺); un cation organique du type "onium", tels que oxonium, ammonium, pyridinium, guanidinium, amidinium, sulfonium, phosphonium, ces cations organiques étant optionnellement substitués par un ou plusieurs radicaux organiques; un cation organométallique tel que les métallocénium, arène-métallocénium, alkylsilyle, alkylgermanyle ou alkylétain.

De telles membranes comportent cependant plusieurs désavantages importants.
A) Bien que les copolymères formant la membrane soient insolubles dans leur forme ionique, la membrane n'a pas une bonne stabilité dimensionnelle et gonfle de façon significative dans l'eau ou les solvants polaires. Ces copolymères forment des micelles inversées uniquement lorsque chauffés à haute température dans un mélange spécifique eau-alcool, qui, après évaporation, permet de produire un film. Toutefois, ce film régénéré sous forme solide n'a pas de bonnes propriétés mécaniques.
B) Le tétrafluoroéthylène (TFE) est un produit dont la manipulation est très risquée, car sa polymérisation s'effectue sous pression et peut causer des réactions non contrôlées, particulièrement en présence d'oxygène. À cause de la différence de point d'ébullition entre les 2 monomères formant le copolymère et leur différence de polarité, il est difficile d'obtenir un copolymère statistique correspondant au taux d'addition de chaque monomère.
C) Les groupements ioniques en forte concentration sur la chaîne auraient tendance à causer la solubilisation du copolymère. Afin de prévenir ce phénomène, la concentration de groupements ioniques est gardée à un faible taux en ajoutant une importante fraction molaire de monomères de TFE et/ou en augmentant la longueur des chaînes secondaires (n > 1), avec pour résultat que la concentration de groupements d'ions échangeables est de moins de 1 milliéquivalent par gramme. Conséquemment, la conductivité est relativement faible et très sensible au contenu d'eau dans la membrane, particulièrement lorsque cette dernière est acidifiée pour des applications dans une pile à combustible.
D) La pénétration du méthanol et de l'oxygène à travers la membrane est élevée, puisque la portion perfluorocarbonée du polymère permet une diffusion facile des espèces moléculaires, qui vont réagir chimiquement à l'électrode opposée et causer une perte d'efficacité faradaïque, principalement dans les piles à combustible de méthanol.

Les systèmes non fluorés tels que les polyimides sulfonés ou les polyéthers sulfones sulfonés présentent les mêmes inconvénients puisqu'il faut faire un compromis entre la densité de charge, donc la conductivité, et la solubilité ou le gonflement excessif.

La présente invention concerne un procédé de réticulation de groupements sulfonyles d'un polymère sulfoné dans lequel au moins une fraction des liaisons de réticulation porte une charge ionique, le procédé comprenant la mise en contact du polymère avec un agent de réticulation permettant la réaction entre 2 groupements sulfonyles provenant de chaînes polymères adjacentes, pour former lesdites liaisons de réticulation, ledit agent de réticulation étant un organométallique ou un composé répondant à l'une des formules :

(M⁺)A₂Y⁻;

(M⁺)AY⁻SO₂(QSO₂) Y⁻A(M⁺);

dans lesquelles
- Y consiste en N ou CR dans lequel R comprend H, CN, F, SO₂R³, C₁₋₂₀ alkyle substitué ou non-substitué; C₁₋₂₀ aryle substitué ou non-substitué; C₁₋₂₀ alkylène substitué ou non substitué, le substituant étant choisi parmi les halogènes et SO₂R;
- R³ comprend F, C₁₋₂₀ alkyle substitué ou non-substitué; C₁₋₂₀ aryle substitué ou non-substitué; C₁₋₂₀ alkylène substitué ou non-substitué, dans lesquels le substituant comprend un ou plusieurs halogènes;
- M⁺ comprend un cation inorganique ou organique;
- Q représente un radical divalent C₁₋₂₀ alkyle, C₁₋₂₀ oxaalkyle, C₁₋₂₀ azaalkyle, C₁₋₂₀ thiaalkyle, C₁₋₂₀ aryle ou C₁₋₂₀ alkylaryle, chacun pouvant être optionnellement substitué par un ou plusieurs halogènes;
- r est 0 ou 1, et
- A comprend M, Si(R')₃, Ge(R')₃, ou Sn(R')₃, dans lesquels R' est C₁₋₁₈ alkyle. Plus spécifiquement, les liaisons de réticulation répondent à l'une des formules

   P-SO₂-Y⁻(M⁺)-SO₂-P'

   P-SO₂(M⁺)Y⁻SO₂-(Q-SO₂)rY(M⁺)SO₂-P'

   dans lesquelles :
   - P et P' sont identiques ou différents et font partie d'une chaîne polymère;
   - Y, Q, r et M sont tels que définis précédemment.

Dans un mode de réalisation préférentiel, M⁺ comprend le proton, le cation d'un métal, un cation organométallique ou un cation organique, ces derniers étant optionnellement substitués par un ou plusieurs radicaux organiques comprenant:
- un atome d'hydrogène, les radicaux alkyles, alkényles, oxaalkyles, oxaalkényles, azaalkyles, azaalkényles, thiaalkyles, thiaalkényles, dialkylazo, silaalkyles optionnellement hydrolysables, silaalkényles optionnellement hydrolysables, lesdits radicaux pouvant être linéaires, ramifiés ou cycliques et comprenant de 1 à 18 atomes de carbone;
- les radicaux cycliques ou hétérocycliques aliphatiques de 4 à 26 atomes de carbone comprenant optionnellement au moins une chaîne latérale comprenant un ou plusieurs hétéroatomes tels que l'azote, l'oxygène ou le soufre;
- les aryles, arylalkyles, alkylaryles et alkénylaryles de 5 à 26 atomes de carbone comprenant optionnellement un ou plusieurs hétéroatomes dans le noyau aromatique ou dans un substituant.

Le métal comprend préférentiellement un métal alcalin, un métal alcalino-terreux, une terre rare ou un métal de transition; le cation organométallique comprend un métallocénium, un arène-métallocénium, un alkylsilyle, un alkylgermanyle ou un alkylétain, et le cation organique comprend un groupement R"O⁺ (onium), NR"⁺ (ammonium), R"C(NHR")₂⁺ (amidinium), C(NHR")₃⁺ (guanidinium), C₅R"N⁺ (pyridinium), C₃R"N₂⁺ (imidazolium), C₂R"N₃⁺ (triazolium), C₃R"N₂⁺ (imidazolinium), SR"⁺ (sulfonium), PR"⁺ (phosphonium), IR"⁺ (iodonium), (C₆R")₃C⁺ (carbonium), dans lesquels R" est défini comme un radical organique tel que défini précédemment, et lorsqu'un cation organique comporte au moins deux radicaux R" différents de H, ces radicaux peuvent former ensemble un cycle aromatique ou non, englobant éventuellement le centre portant la charge cationique.

Dans un autre aspect préférentiel le radical divalent et le polymère sulfoné sont partiellement ou totalement fluorés.

Il est bien connu que les polymères perfluorés ne peuvent habituellement pas être réticulés par des techniques conventionnelles utilisées pour les polymères non fluorés du fait de l'élimination facile de l'ion fluorure et de l'encombrement stérique des chaînes perfluorées. Cependant, la présente invention décrit une nouvelle technique générale pour créer des réticulations, i.e., des liens, entre les groupements sulfonyles attachés aux chaînes polymères adjacentes, incluant ceux ayant un squelette perfluoré, par exemple, ceux dérivés du monomère (1) et ses copolymères:

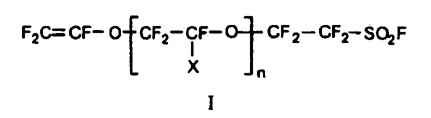

Avantageusement, la réticulation peut être réalisée alors que le polymère est sous forme de précurseur polymère non ionique, mais après avoir été moulé sous la forme désirée. Il en résulte donc un matériau beaucoup plus résistant mécaniquement. La présente invention concerne également le moulage du polymère réticulé sous forme de membrane ou de fibres creuse (ci-après "membranes") pour utilisation dans une pile à combustible, électrolyseur dans l'eau, un procédé chlore-soude, l'électrosynthèse, le traitement d'eau et la production d'ozone. L'utilisation des polymères réticulés comme catalyseurs de certaines réactions chimiques, grâce à la forte dissociation des groupements ioniques introduits par la technique de réticulation et l'insolubilité de la chaîne polymère, fait aussi partie de l'invention.

La création de réticulations stables se fait par l'entremise d'une réaction entre deux groupements -SO₂Y provenant de chaînes polymères adjacentes. La réaction est initiée par un agent de réticulation, et permet la formation de dérivés selon les formules suivantes: 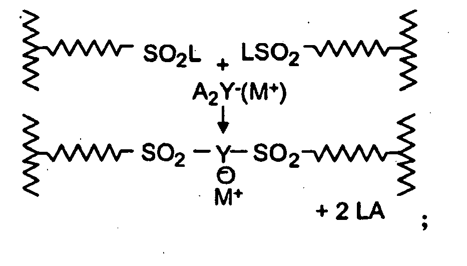 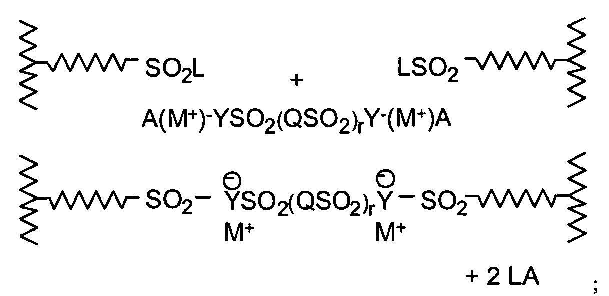 dans lesquelles r, M, Y et Q sont tels que définis précédemment;
- A comprend M, Si(R')₃, Ge(R')₃ ou Sn(R')₃ dans lesquels R' est C₁₋₁₈ alkyle; et
- L comprend un groupement labile tels que qu'un halogène (F, Cl, Br), un hétérocycle électrophile N-imidazolyl ou N-triazolyl, R²SO₃ dans lequel R² est un radical organique tel que défini précédemment.

Le cation M⁺ peut lui-même être solvaté ou complexé pour augmenter sa solubilité et/ou sa réactivité. Par exemple, si M est un proton, ce dernier peut être complexé à l'aide d'une base tertiaire ayant un fort caractère nucléophile, tel que la triéthylamine, la diméthylaminopyridine, le 1,4-diazabicyclo[2.2.2]octane, ou sous forme de radical tertiobutyle qui se sépare aisément en proton et CH₂=C(CH₃)₃. Si M est un ion métallique, ce dernier peut être solvaté par les dialkyléthers d'oligo-éthylène glycols, ou oligo-éthylènediamines méthylés.

Dans une variante, l'agent de réticulation A₂Y⁻(M⁺) peut être formé *in situ* en présence d'une base forte, par exemple un organométallique ou un dialkyle amine métallique tel que le diisopropylamide-lithium réagissent sur les protons labiles liés au radical Y de la façon suivante:

HN[Si(CH₃)₃]₂ + C₄H₉Li ⇒ C₄H₁₀ + LiN[Si(CH₃)₃]₂;

CH₂[Si(CH₃)₃]SO₂CF₃ + 2CH3MgClLi ⇒ 2CH₄ + (MgCl)₂C[Si(CH₃)₃]SO₂CF₃

Les agents de réticulation organométalliques préférentiels incluent les organo-lithium, organo-magnésium ou organo-aluminium, qui servent également de source de carbone lorsque Y = CR, et les amides et nitrure métalliques comme source d'azote lorsque Y = N.

Un avantage de la présente invention est que les agents de réticulation créent des espèces chargées négativement qui sont attachées aux groupements sulfonyles des polymères et utilisées comme pont entre les chaînes polymères adjacentes. Il est bien connu que les groupements sulfonylimides et les groupements di- ou trisulfonylméthane sont des électrolytes forts dans la plupart des milieux, et en ce sens, la réaction de réticulation, en plus d'améliorer les propriétés mécaniques, n'a pas d'effet néfaste sur la conductivité. De fait, cette dernière est souvent augmentée.

Les composés suivants sont des exemples d'agents de réticulation ionogènes préférentiels, i.e., générateur de groupements ioniques, lorsque L est sur la chaîne polymère: Li₃N; C₃Al₄; [(CH₃)₃Si]₂NLi (ou Na ou K); NH₃ + 3 DABCO; CF₃SO₂C[(CH₃)₃Si][Li(TMEDA)]₂; (CH₃)₃CNH₂ + 3 TEA; NH₂SO₂NH₂ + 4 TEA; [[(CH₃)₃Si](Li)N]₂SO₂; [(TMEDA)(Mg)N]₂SO₂; CH₃Li; (CH₃)₃Al; NH₂Li (ou Na ou K); [[Si(CH₃)₃](Li)NSO₂]₂CF₂; [Li[Si(CH₃)₃]NSO₂CF₂]₂CF₂; [(Li)Si(CH₃)₃NSO₂CF₂]; et [Li[Si(CH₃)₃]NSO₂CF₂CF₂]₂O, dans lesquels TEA : triéthylamine ; TMEDA : N,N,N'N' tétraméthyléthylene diamine ; DABCO = 1,4-diazabicyclo-[2,2,2,]-octane.

Alternativement, la réaction de réticulation peut avoir lieu lorsque le groupement Y est déjà sur le précurseur du polymère, par exemple dans le cas d'une amide substituée. Dans ce cas, le schéma général est le suivant :

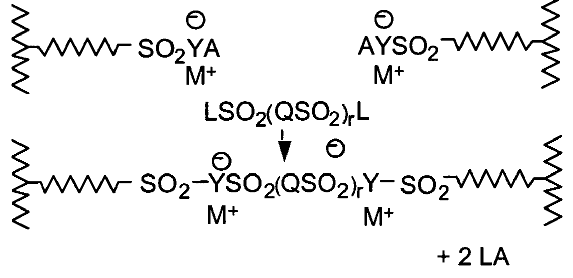

Les composés suivants sont des exemples d'agents de réticulation ionogènes préférentiels lorsque L est sur le réactif: SO₂Cl₂ + 3 DABCO; SO₂(imidazole)₂; [FSO₂CF₂]₂ + 3 TEA; (ClSO₂CF₂)CF₂ + 3 DABCO et (FSO₂CF₂CF₁)₂O + 3 DABCO.

La réaction de réticulation peut impliquer la totalité des groupements sulfonyles, ou seulement une fraction de ceux-ci. Les réactifs de réticulation peuvent être ajoutés ou utilisés selon différentes techniques bien connues de la personne du métier. Avantageusement, le polymère est moulé sous la forme désirée avant la réticulation, par exemple sous forme de membrane ou de fibre creuse, et le matériau est immergé ou recouvert d'une solution de l'agent de réticulation dans un ou plusieurs solvants favorisant la réaction de couplage. Les solvants préférentiels sont les polyhalocarbures, le tétrahydrofuranne (THF), les glymes, les alkylamides tertiaires tels que le diméthylformamide, le N-méthylpyrrolidone, la tétraméthylurée et ses analogues cycliques, les N-alkylimidazoles, et les tétraalkylsulfamides. Le degré de réticulation désiré peut être contrôlé par différents facteurs, tels que le temps d'immersion dans le solvant contenant l'agent de réticulation, la température du solvant, la concentration d'agent de réticulation dans le solvant, ou une combinaison de ces facteurs. De préférence, ces paramètres sont ajustés de manière à produire les propriétés désirées dans un temps relativement court variant entre quelques secondes à un dizaine d'heures, et les températures sont choisies comme compatibles avec les solvants usuels, de -10°C à 250°C. À titre de comparaison, l'hydrolyse d'une membrane Nafion® prend plus de 24 h pour les épaisseurs habituelles.

Alternativement, un latex du polymère à mouler est mélangé préférablement en présence de fluides n'étant pas des solvants, tel que les hydrocarbures ordinaires ou fluorés, avec l'agent de réticulation sous forme solide et le mélange est pressé ou calandré à chaud. Cette technique s'applique avantageusement aux membranes minces, et permettent d'obtenir une haute productivité même s'il est possible que la membrane résultante soit moins homogène. Des agents de renforcement tels que des agents de remplissage, organiques ou inorganiques, comme des poudres, des fibres ou filaments tissés ou non, peuvent être ajoutés aux polymères avant la réaction de réticulation pour en renforcer la structure. De même, des agents permettant de créer un porosité ("porophores") peuvent être incorporés lorsqu'il est souhaitable d'augmenter les surfaces d'échange avec les fluides extérieurs (cas de la catalyse).

Si seulement une fraction des liens faisant le pont entre les chaînes polymères sont requis, les groupements SO₂Y restants peuvent être hydrolysés de façon conventionnelle sous forme de sulfonate par hydrolyse alcaline. Alternativement, dans un mode de réalisation préférentiel, le groupement sulfonate -SO₃⁻M⁺ et les groupements non réticulés -SO₂NSO₂R_{F}⁻M⁺ ou -SO₂C(R)SO₂R_{F}⁻M⁺ dans lequel R_{F} comprend un radical organique préférablement halogéné, particulièrement fluoré, peuvent être obtenus dans les mêmes conditions que lors des réactions de réticulation à partir d'agents ionogènes non réticulants tels que M[(CH₃)₃SiO], M[(CH₃)₃SiNSO₂R_{F}] ou M[(CH₃)₃SiC(R)SO₂R_{F}], ou tout autre agent capable d'introduire les groupements -NSO₂R_{F} ou C(R)SO₂R_{F} en substitution de Y. Il peut être avantageux de traiter la membrane de façon séquentielle avec l'agent de réticulation, et ensuite avec l'agent ionogène non réticulant. Alternativement, l'agent de réticulation et l'agent ionogène non réticulant sont mélangés et dissous dans un solvant en concentrations prédéterminées, de sorte qu'ils réagissent simultanément.

Le polymère réticulé obtenu selon le procédé de la présente invention peut être facilement séparé des produits secondaires de la réaction, qui sont soit volatiles, comme le (CH₃)₃SiF ou (CH₃)₃SiCl. Alternativement, le polymère réticulé peut être lavé à l'aide d'un solvant approprié comme l'eau ou un solvant organique dans lequel il est insoluble. En outre, des techniques classiques bien connues de la personne du métier, comme par exemple l'échange d'ions ou l'électrophorèse, peuvent être utilisées pour changer le cation M⁺ obtenu dans la réaction de réticulation et/ou venant du l'agent ionogène non réticulant par le cation désiré pour l'application finale.

Les exemples suivants sont fournies afin d'illustrer l'invention, et ne doivent en aucun temps être considérés comme en limitant la portée.

### Exemple 1

15 g de polyéthersulfone sous forme de poudre sont sulfonés par 11 g d'acide chlorosulfonique dans 75 ml de 1,2-dichloroéthane. La concentration des groupements sulfoniques atteint 0.47 unités SO₃H par noyau aromatique. Les groupements SO₃H sont transformés en groupements SO₂Cl par action d'un excès de chlorure de chloro-diméthylaminium dans le DMF. Le polymère sous forme de poudre est filtré puis lavé par de l'acétonitrile anhydre et séché sous vide. Sous atmosphère anhydre, le polymère sous forme chlorosulfonée est mis en forme de film par pressage et calandrage à 150°C. Un film de 50 microns d'épaisseur est découpé en carrés de 4 cm de côté et immergé dans une solution de 0.6 g du dérivé lithié de l'hexaméthyl-disilazane Li[N(Si(CH₃)₃)₂] dans 50 ml de diméthyléthylèneurée (DMEU). Le polymère est traité dans ces conditions pendant 1 heure à 110°C sous atmosphère d'argon sec. La membrane est retirée du milieu réactionnel, rincée au THF et traitée par un excès de triméthylsilanoate de lithium (1 g) dans 50 ml de 1,2-diméthoxyéthane sous argon pendant 24 heures à 25°C. La membrane est rincée plusieurs fois à l'eau distillée et les ions métalliques sont échangés par des protons dans un extracteur de type Soxhlet par une solution d'acide chlorhydrique à la concentration azéotropique dans l'eau (i.e., 20.2% en poids). La membrane ainsi obtenue a une conductivité supérieure à 10⁻³ Scm⁻¹ à 25°C et 95% d'humidité relative. 24% des groupements sulfonyles sont engagés dans la formation de ponts imidures et la membrane ne présente pas de variations de dimensions appréciables dans les différent solvants testés, en l'occurrence eau, méthanol, éthanol, acétonitrile et carbonate de propylène.

### Exemple 2

Une membrane commerciale de Nafion 117® de 175 µm d'épaisseur sous forme de sel de lithium est séchée et découpée en lanières de 4 cm x 10 cm de côté. La membrane enroulée en spirale est traitée par 2 g de diméthylaminotrifluorure de soufre (CH₃)₂NSF₃ dans 50 ml de THF au reflux puis rincée. Le polymère contenant maintenant les groupements sulfonés sous forme SO₂F est immergé dans une solution de 60 mg de sel de sodium de l'héxaméthydisilazane dans 20 ml de diglyme anhydre et porté au reflux sous argon. Après 3 heures, la membrane est extraite du milieu réactionnel, rincée au THF puis traitée par une solution de 500 mg de triméthysilanoate de sodium dans le même solvant. Après 48 heures, la membrane est lavée à l'eau et à l'éthanol, puis transformée en sel d'hydronium par plusieurs immersions successives dans une solution d'acide nitrique 2 M dans l'eau à 60°C. Par RMN du solide haute résolution, on détermine que 32 % des groupements sulfonyles de la membrane sont sous forme de sulfonimide et 78% sous forme de sulfonate. L'augmentation du volume de la membrane en présence d'eau ou de méthanol lors de l'immersion dans ces solvants, y compris à la température d'ébullition, est inférieure à 10%.

### Exemple 3

Un copolymère de tétrafluoroéthylène et de fluorure perfluorovinyloxyéthane-sulfonyle contenant 35% molaire de monomère sulfoné est calandré à chaud pour former un film de 20 microns d'épaisseur. Le composé [Na(Si(CH₃)₃NSO₂CF₂]₂CF₂ est préparé à partir du fluorure de l'acide hexafluoro-propane-1,3-disulfonique selon la séquence de réactions suivantes:

[FSO₂CF₂]₂CF₂ + 6 NH₃ ⇒ 2 NH₄F + [(NH₄)HNSO₂CF₂]₂

[(NH₄)HNSO₂CF₂]₂ + Na₂CO₃ ⇒ [(Na)HNSO₂CF₂]₂ + 2 NH₃ + H₂O + CO₂

[(Na)HNSO₂CF₂]₂ + HN[(Si(CH₃)₃]₂ ⇒ Na[Si(CH₃)₃NSO₂CF₂]₂CF₂ + NH₃

10 sections carrées de 10 cm x 10 cm de cette membrane séparées par des treillis de polypropylène, sont immergées dans une cuve en verre et recouvertes d'une solution de 600 mg du dérivé disodique de la sulfamide dans 50 ml de diglyme. Le mélange réactionnel est porté à 125°C pendant 4 heures sous argon. Les membranes sont ensuite immergées dans une solution de 1 g d'hydroxyde de lithium LiOH dans 50 ml de méthanol, et l'hydrolyse des fonctions SO₂F résiduelles en groupements sulfonates est poursuivie à 50°C pendant 4 heures. La membrane réticulée est lavée à l'eau déionisée, et les ions sodium sont échangés par des protons par l'acide nitrique 2M. La membrane est stockée sous air après rinçage à l'eau déionisée.

Les composés [FSO₂CF₂]₂O, [FSO₂CF₂CF₂]₂O, et [ClSO₂CF₂CF₂]CF₂ peuvent d'une manière similaire être substitués au fluorure de l'acide hexafluoro-propane-1,3-disulfonique comme précurseurs de l'agent pontant.

### Exemple 4

La membrane de 20 µm du copolymère de tétrafluoroéthylène et de fluorure perfluorovinyloxyéthane-sulfonyle de l'exemple 3 est traitée par une solution de 800 mg du dérivé disodique de la sulfamide de l'exemple 3 et 400 mg de triméthylsilanoate de sodium dans 50 ml de diglyme. Le mélange réactionnel est porté à 125°C pendant 4 heures sous argon. La membrane est extraite, et lavée à l'eau déionisée et échangée par des protons comme pour l'exemple 3.

### Exemple 5

Un copolymère de tétrafluoroéthylène et de fluorure perfluorovinyloxyéthane-sulfonyle à 35% molaire de monomère sulfoné de l'exemple 3 est réticulé d'une manière similaire par immersion dans l'agent pontant [Na(Si(CH₃)₃NSO₂CF₂]₂CF₂ dans les conditions de l'exemple 3. La membrane ainsi réticulée et contenant des groupements résiduels -SO₂F est traitée par 2 g de sel de sodium du dérivé trifluorométhanesulfonamide de formule Na[Si(CH₃)₃NSO₂CF₃] dans le diglyme à 110°C. La membrane est rincée et les ions sodium sont échangés par des protons par l'acide nitrique 2M. La totalité des fonctions sulfonées de la membrane sont sous forme de groupements sulfonamides pontant ou libres :

P-SO₂N(H)SO₂(CF₂)₃SO₂N(H)SO₂-P

P-SO₂N(H)SO₂(CF₃)

dans lesquels P représentant la chaîne polymère.

### Exemple 6

Un copolymère de tétrafluoroéthylène et de fluorure perfluorovinyloxyéthane-sulfonyle similaire à celui préparé dans l'exemple 3 et contenant 35% de monomère sulfoné, est mélangé à chaud avec du chlorure de sodium en poudre de taille inférieure à 2 microns et à la fraction volumique de 45%, puis est mis sous forme de granulés d'environ 25 microns de diamètre. 5 g de ce copolymère composite sont traités par 2 g de dérivé sodique de l'hexaméthyldisilazane dans 30 ml de diglyme à 125°C pendant 3 heures et les fonctions SO₂F résiduelles sont mises à réagir avec le sel de sodium du dérivé trifluorométhanesulfonamide de formule Na[Si(CH₃)₃NSO₂CF₃] dans le diglyme à 125°. Après lavage à l'eau et élimination du chlorure de sodium agissant comme porophore, i.e., créant de la porosité après son élimination, le polymère se présente sous forme de granules de grande surface spécifique permettant un accès rapide aux sites ioniques.

### Exemple 7

Le composé [CF₃SO₂C(MgCl)₂SO₂CF₂]₂CF₂ est préparé à partir du fluorure de l'acide hexafluoro-propane-1,3-disulfonique selon la séquence de réactions suivantes:
[FSO₂CF₂]₂CF₂ + 2CF₃SO₂CH₃ + 4LiH ? 2H₂ + [CF₃SO₂CH(Li)SO₂CF₂]₂CF₂
[CF₃SO₂CH(Li)SO₂CF₂]₂CF₂ + 2C₄H₉Li + 4 MgCl₂ ?

[CF₃SO₂C(MgCl)₂SO₂CF₂]₂CF₂ + 2C₄H₁₀ + 2LiCl
La séquence de réactions se fait dans le même récipient (synthèse "one pot") dans l'éther dibutylique du diéthylène glycol (Ferro, USA). Une membrane de 20 microns d'épaisseur et de 10 cm x 10 cm préparée à partir du copolymère de l'exemple 3 est immergée dans une solution de 200 mg du tétrasel de chloromagnésium de la tétrasulfone dans 30 ml d'éther dibutylique du diéthylène glycol anhydre. La réaction est effectuée sous azote désoxygéné à 110°C pendant 6 heures. La membrane est extraite du milieu réactionnel, rincée au THF et l'hydrolyse des groupements SO₂F résiduels est effectuée comme précédemment par le triméthylsilanoate de lithium. La membrane est lavée et échangée par des protons dans les conditions de l'exemple 3. Les composés [FSO₂CF₂]₂O, [FSO₂CF₂CF₂]₂O, et [ClSO₂CF₂CF₂]CF₂ peuvent d'une manière similaire être substitués au fluorure de l'acide hexafluoro-propane-1,3-disulfonique comme précurseurs de l'agent pontant.

### Exemple 8

Un polymère de fluorure 4-trifluorovinyl-benzènesulfonyle est préparé par amorçage radicalaire par le peroxyde de benzoyle dans le diméthylformamide. Le polymère est précipité dans l'éther. Une solution à 12% de ce polymère dans la cyclopentanone est épandue à l'aide d'un gabarit et le solvant est séché sous air sec. Le film de polymère obtenu a une épaisseur de 24 microns. 100 cm² de cette membrane sont immergés dans un mélange de 200 mg de sel de sodium de l'hexaméthyldisilazane et 100 mg de triméthylsilanoate de sodium dans 10 ml dans d'un mélange o-xylène/diglyme (50:50 v/v). Le milieu réactionnel est maintenu à 80°C pendant 10 heures et les sous-produits de la réaction sont éliminés par lavages successifs dans le THF, le méthanol et l'eau. L'échange des ions lithium par les protons donnent un matériau dont la conductivité est supérieure à 10⁻² Scm⁻¹ à 95% d'humidité relative.

### Exemple 9

Le poly(fluorure 4-trifluorovinyl-benzènesulfonyle) de l'exemple 7 est épandu sous forme de solution sur un support de polypropylène pour former un film de 35 microns d'épaisseur, qui est ensuite découpé en une membrane de 1 mètre x 10 cm de côté. Cette membrane enroulée en spirale avec un treillis d'acier inoxydable en métal déployé permettant l'accès à toute la surface de la membrane. Cet assemblage est placé dans un réacteur de 100 ml auquel sont ajoutés 2 ml d'une solution 0.5 M d'ammoniac dans le dioxanne et 700 mg de DABCO (1,4-diazabicyclo-[2,2,2,]-octane) dans 80 ml de diméthoxyéthane. Le réacteur est fermé et maintenu à 115°C pendant 4 heures sous pression autogène. Après refroidissement et rétablissement de la pression ambiante, la membrane est séparée du milieu réactionnel et l'hydrolyse des groupements SO₂F résiduels est effectuée à l'aide d'une solution de 5 g de soude dans un mélange éthanol-eau (80:20 v/v). L'échange sous forme protonique se fait dans les mêmes conditions que pour l'exemple 8.

### Exemple 10

10 g d'un copolymère de tétrafluoroéthylène et de fluorure perfluorovinyloxyéthane-sulfonyle contenant 28% molaire de monomère sulfoné obtenu sous forme de latex par polymérisation en émulsion et 300 mg de nitrure de lithium en poudre de taille submicronique sont dispersés à l'aide d'un mélangeur dans 50 ml de Fluorinert FC-75® (3M, USA). La suspension est épandue à l'aide d'un gabarit sur un feuillard d'acier inoxydable de 25 microns d'épaisseur et le solvant est évaporé laissant un film de 30 microns d'épaisseur qui est ensuite recouvert par un autre feuillard d'acier inoxydable. Le polymère fluoré est réticulé par pressage à chaud à 100 Kg.cm⁻² et 150°C pendant 1 heure. La réaction de réticulation ou pontage entre les fonctions -SO₂F se produit selon l'équation suivante:

2-SO₂F + Li₃N ⇒ 2 LiF + -SO₂N(Li)SO₂F-

Après séparation des feuillards, les fonctions SO₂F résiduelles sont hydrolysées par une solution aqueuse d'hydroxyde de lithium, et plusieurs lavages à l'eau permettent d'éliminer le fluorure de lithium, qui est un sous-produit de la réaction de réticulation ou d'hydrolyse des groupements SO₂F. Les membranes sont échangés par des protons par plusieurs immersions successives dans l'acide nitrique 2M à 60°C.

Le même procédé de réticulation peut être appliqué en remplaçant le nitrure de lithium par le carbure d'aluminium (240 mg pour 10 g) pour obtenir des ponts sulfone.

### Exemple 11

Une membrane de copolymère de tétrafluoroéthylène et de fluorure perfluorovinyloxyéthane-sulfonyle similaire à celle de l'exemple 3 est immergée dans une solution 0.5 M d'ammoniaque dans le dioxanne et laissée à réagir pendant 48 heures. Les groupements -SO₂F sont transformés en groupements -SO₂NH(NH₄) à partir desquels la sulfonamide est obtenue par traitement par un solution d'acide chlorhydrique et rincée. Le sel de sodium est obtenu par immersion dans une solution à 10% de carbonate de sodium, suivi d'un rinçage à l'eau déionisée. Le polymère est séché sous vide et 100 cm² de la membrane sont immergés dans une solution d'hexaméthydilsilazane dans l'acétonitrile et portée au reflux pendant 48 heures. Après séparation du milieu réactionnel et séchage, la membrane est placée dans un réacteur contenant 100 ml d'acétonitrile et 300 mg de fluorure de l'acide hexafluoro-propane-1,3-disulfonique [FSO₂CF₂]₂CF₂, et le réacteur est fermé et chauffé à 110°C pendant deux heures. Après refroidissement, la membrane est extraite et les groupements -SO₂F restant sont hydrolysés par une solution de soude dans le mélange eau-alcool (50:50 v/v) au reflux. Les ions sodium sont échangés par les protons d'une manière similaire aux exemples précédents par l'acide nitrique 2M.

Dans une variante, les fonctions sulfonamides -SO₂NH₂ sont traités par un excès de dibutyl-magnésium, la membrane est rincée au THF anhydre et mise en contact à température ordinaire dans une solution de [FSO₂CF₂]₂CF₂. Dans les deux méthodes, les composés [FSO₂CF₂]₂O, [FSO₂CF₂CF₂]₂O, et [ClSO₂CF₂CF₂]CF₂ peuvent être substitués au fluorure de l'acide hexafluoro-propane-1,3-disulfonique.

### Exemple 12

Une pile à combustible expérimentale est fabriquée à partir d'une membrane préparée selon l'exemple 3. Une dispersion nanométrique de platine sur support de carbone (Degussa, Allemagne) est appliquée de part et d'autre de la membrane par une technique de sérigraphie à partir d'une dispersion du carbone platiné dans une solution colloïdale (5% w/w) de Nafion 117® dans un mélange d'alcools légers (Aldrich). Le système est traité à 130°C pour assurer la cohésion des particules de Nafion®. Les collecteurs de courants sont constitués de plaques de graphite rainuré pour assurer la distribution des gaz. La pile expérimentale est testée avec une alimentation d'hydrogène et d'oxygène à pression ordinaire. La tension en circuit ouvert est de 1.2 V et la courbe courant-tension mesurée sur ce montage indique que 500 mA/cm² sont obtenus à la tension de 0.65 V. Le remplacement du platine de l'électrode négative par un alliage platine-ruthénium 50:50 permet l'utilisation comme combustible de méthanol avec une densité de courant de 150 mA/cm² à la tension de 0.6 V. La perméation du méthanol dans ces conditions est inférieure à 5 µmoles/cm²•s¹.

### Exemple 13

Une pile à combustible expérimentale est fabriquée à partir d'une membrane préparée selon l'exemple 9 sous la forme de précurseurs -SO₂F. L'électrode de carbone platiné de l'exemple 11 est appliquée de part et d'autre de la membrane par sérigraphie d'une suspension de ce matériau dans une solution du fluorure de poly(trifluorométhylstyrène sulfonyle) dans le 1,2-dichloroéthane. La réticulation des fonctions -SO₂F du système complet est, d'une manière similaire à celle de l'exemple 7, effectuée par réaction sur un mélange de dérivé sodique de l'hexaméthyldisilazane et de triméthylsilanoate de sodium dans 10 ml dans d'un mélange o-xylène/diglyme (50:50 v/v). Après réticulation, les ions Na⁺ de la membrane et du liant des électrodes sont échangés par des protons à l'aide d'acide chlorhydrique concentré et rinçage.
La pile à combustible expérimentale utilisant cet assemblage a des performances similaires à celles obtenues pour la pile décrite dans l'exemple 12.

### Exemple 14

L'électrolyse du chlorure de sodium est effectuée dans une cellule à deux compartiments séparés par une membrane préparée selon l'exemple 3, l'anode étant du type DSA ("dimensionnaly stable electrode") et constituée de titane recouvert d'une couche d'oxyde de ruthénium RuO₂, en contact avec la membrane, la cathode étant en nickel. La chute ohmique pour 2 A/cm² est de 0.4V, et la perméation des ions OH⁻ à travers la membrane est inférieure à 8,5 µmoles/ cm²•s^{1.}

### Exemple 15

La membrane préparée selon l'exemple 4 est utilisée pour la préparation d'ozone par électrolyse de l'eau sur une anode de dioxyde de plomb. La cathode est une grille de platine, les deux électrodes étant plaquées sur la membrane dont le coté cathodique est immergé dans l'eau. Le rendement faradique en ozone et de 20% sous 4.5V.

### Exemple 16

La résine échangeuse d'ion poreuse préparée à l'exemple 5 est utilisée comme catalyseur de réaction chimique. Sous forme protonique active après déshydratation sous vide, la résine catalyse les réactions de Friedel-Craft, les estérifications, les acétalisations etc. À un mélange équimoléculaire d'anisole et d'anhydride acétique sont ajoutés 3% en poids de la résine sous forme acide. La réaction de formation de la 4-méthoxyacétophénone est complète en 45 minutes à température ordinaire.

L'échange des protons pour les ions de transition et les métaux des terres rares, en particulier La⁺³ et Y⁺³ donne un catalyseur pour les réactions de Friedel-Craft et de cross-aldolisation.

À un mélange équimoléculaire de cyclopentadiène et de vinyl-méthyl cétone (10 mmoles dans 30 cc de dichlorométhane) sont ajoutés 5% en poids de la résine sous forme Y⁺³ séchée sous vide à 60°C. La réaction de formation du composé de condensation de Diels-Alder est complète à 25°C en 30 minutes, le rapport endo/exo étant proche de 90:10.

Dans les deux cas, le catalyseur est éliminé par simple filtration et réutilisable.

Bien que la présente invention ait été décrite à l'aide de mises en oeuvre spécifiques, il est entendu que plusieurs variations et modifications peuvent se greffer aux dites mises en oeuvre, et la présente demande vise à couvrir de telles modifications, usages ou adaptations de la présente invention suivant, en général, les principes de l'invention et incluant toute variation de la présente description qui deviendra connue ou conventionnelle dans le champ d'activité dans lequel se retrouve la présente invention, et qui peut s'appliquer aux éléments essentiels mentionnés ci-haut, en accord avec la portée des revendications suivantes.

## Revendications

1. Procédé de réticulation de groupements sulfonyles d'un polymère sulfoné dans lequel au moins une fraction des liaisons de réticulation porte une charge ionique, le procédé comprenant la mise en contact du polymère avec un agent de réticulation permettant la réaction entre 2 groupements sulfonyles provenant de chaînes polymères adjacentes, pour former lesdites liaisons de réticulation, ledit agent de réticulation étant un organométallique ou un composé de formule générale :
(M⁺)A₂Y⁻;
(M⁺)AY⁻SO₂(Q-SO₂)ᵣY⁻A(M⁺)
dans lesquelles
- Y consiste en N ou CR dans lequel R représente H, CN, F, SO₂R³, C₁₋₂₀ alkyle substitué ou non-substitué; C₁₋₂₀ aryle substitué ou non-substitué; C₁₋₂₀ alkylène substitué ou non-substitué, le substituant étant choisi parmi les halogènes et SO₂R,
- R³ comprend F, C₁₋₂₀ alkyle substitué ou non-substitué; C₁₋₂₀ aryle substitué ou non-substitué; C₁₋₂₀ alkylène substitué ou non-substitué, dans lesquels le substituant comprend un ou plusieurs halogènes;
- M⁺ comprend un cation inorganique ou organique;
- Q représente un radical divalent C₁₋₂₀ alkyle, C₁₋₂₀ oxaalkyle, C₁₋₂₀ azaalkyle, C₁₋₂₀ thiaalkyle, C₁₋₂₀ aryle ou C₁₋₂₀ alkylaryle, chacun pouvant être optionnellement substitué par un ou plusieurs halogènes;
- r est 0 ou 1,
- et A comprend M, Si(R')₃, Ge(R')₃ ou Sn(R')₃ dans lesquels R' est C₁₋₁₈ alkyle.

2. Procédé selon la revendication 1, dans lequel les liaisons de réticulation sont du type suivant :
P-SO₂-Y⁻(M⁺)-SO₂-P'; ou
P-SO₂(M⁺)Y⁻SO₂-(Q-SO₂)ᵣY⁻(M⁺)SO₂-P'
dans lesquelles
- P et P' sont identiques ou différents et font partie d'une chaîne polymère;
- Y consiste en N ou CR dans lequel R représente H, CN, F, SO₂R³, C₁₋₂₀ alkyle substitué ou non-substitué; C₁₋₂₀ aryle substitué ou non-substitué; C₁₋₂₀ alkylène substitué ou non-substitué, le substituant étant choisi parmi les halogènes et SO₂R,
- R³ comprend F, C₁₋₂₀ alkyle substitué ou non-substitué; C₁₋₂₀ aryle substitué ou non-substitué; C₁₋₂₀ alkylène substitué ou non-substitué, dans lesquels le substituant comprend un ou plusieurs halogènes;
- M⁺ comprend un cation inorganique ou organique;
- Q représente un radical divalent C₁₋₂₀ alkyle, C₁₋₂₀ oxaalkyle, C₁₋₂₀ azaalkyle, C₁₋₂₀ thiaalkyle, C₁₋₂₀ aryle ou C₁₋₂₀ alkylaryle, chacun pouvant être optionnellement substitué par un ou plusieurs halogènes;
- r est 0 ou 1.

3. Procédé selon la revendication 2 dans lequel M⁺ comprend le proton, le cation d'un métal, un cation organométallique ou un cation organique optionnellement substitué par un ou plusieurs radicaux organiques comprenant:
- le proton, les radicaux alkyles, alkényles, oxaalkyles, oxaalkényles, azaalkyles, azaalkényles, thiaalkyles, thiaalkényles, dialkylazo, silaalkyles optionnellement hydrolysables, silaalkényles optionnellement hydrolysables, lesdits radicaux pouvant être linéaires, ramifiés ou cycliques et comprenant de 1 à 18 atomes de carbone;
- les radicaux cycliques ou hétérocycliques aliphatiques de 4 à 26 atomes de carbone comprenant optionnellement au moins une chaîne latérale comprenant un ou plusieurs hétéroatomes tels que l'azote, l'oxygène ou le soufre;
- les aryles, arylalkyles, alkylaryles et alkénylaryles de 5 à 26 atomes de carbone comprenant optionnellement un ou plusieurs hétéroatomes dans le noyau aromatique ou dans un substituant.

4. Procédé selon la revendication 3 dans lequel le métal comprend un métal alcalin, un métal alcalino-terreux, une terre rare ou un métal de transition; le cation organométallique comprend un métallocénium, un arène-métallocénium, un alkylsilyle, un alkylgermanyle ou un alkylétain, et le cation organique comprend un groupement R"O⁺ (onium), NR"⁺ (ammonium), R"C(NHR")₂⁺ (amidinium), C(NHR")₃⁺ (guanidinium), C₅R"N⁺ (pyridinium), C₃R"N₂⁺ (imidazolium), C₂R"N₃⁺ (triazolium), C₃R"N₂⁺ (imidazolinium), SR"⁺ (sulfonium), PR"⁺ (phosphonium), IR"⁺ (iodonium), (C₆R")₃C⁺ (carbonium), dans lesquels R" comprend un radical organique tel que défini précédemment, et lorsqu'un cation organique comporte au moins deux radicaux R" différents de H, ces radicaux peuvent former ensemble un cycle aromatique ou non, englobant éventuellement le centre portant la charge cationique.

5. Procédé selon la revendication 2 dans lequel le radical divalent et le polymère sulfoné sont partiellement ou totalement fluorés.

6. Procédé selon la revendication 1 dans lequel un groupement labile est lié aux groupements sulfonyles avant d'effectuer la réticulation.

7. Procédé selon la revendication 6 dans lequel le groupement labile comprend F, Cl, Br, un hétérocycle électrophile N-imidazolyl, N-triazolyl, R²SO₃, R² étant un radical organique optionnellement halogéné, le radical organique comprenant:
- le proton, les radicaux alkyles, alkényles, oxaalkyles, oxaalkényles, azaalkyles, azaalkényles, thiaalkyles, thiaalkényles, dialkylazo, silaalkyles optionnellement hydrolysables, silaalkényles optionnellement hydrolysables, lesdits radicaux pouvant être linéaires, ramifiés ou cycliques et comprenant de 1 à 18 atomes de carbone;
- les radicaux cycliques ou hétérocycliques aliphatiques de 4 à 26 atomes de carbone comprenant optionnellement au moins une chaîne latérale comprenant un ou plusieurs hétéroatomes tels que l'azote, l'oxygène ou le soufre;
- les aryles, arylalkyles, alkylaryles et alkénylaryles de 5 à 26 atomes de carbone comprenant optionnellement un ou plusieurs hétéroatomes dans le noyau aromatique ou dans un substituant.

8. Procédé selon la revendication 2 dans lequel l'agent de réticulation comprend un organométallique comprenant les organo-lithium, organo-magnésium ou organoaluminium.

9. Procédé selon la revendication 8 dans lequel A comprend un groupement trialkylsilyle.

10. Procédé selon la revendication 1 dans lequel l'agent de réticulation comprend Li₃N; C₃Al₄; [(CH₃)₃Si]₂NLi (ou Na ou K); NH₃ + 3 DABCO; CF₃SO₂C[(CH₃)₃Si][Li(TMEDA)]₂; (CH₃)₃CNH₂ + 3 TEA; NH₂SO₂NH₂ + 4 TEA; ([(CH₃)₃Si](Li)N]₂SO₂; [(TMEDA)(Mg)N]₂SO₂; CH₃Li; (CH₃)₃Al; NH₂Li (ou Na ou K); [[Si(CH₃)₃](Li)NSO₂]₂CF₂; [Li[Si(CH₃)₃]NSO₂CF₂]₂CF₂; [(Li)Si(CH₃)₃NSO₂CF₂]₂; [Li[Si(CH₃)₃]NSO₂CF₂CF₂]₂O; SO₂Cl₂ + 3 DABCO; SO₂(imidazole)₂; [FSO₂CF₂]₂ + 3 TEA; (ClSO₂CF₂)CF₂ + 3 DABCO et (FSO₂CF₂CF₁)₂O + 3 DABCO.

11. Procédé selon la revendication 1 dans lequel le polymère non réticulé est moulé avant d'être réticulé.

12. Procédé selon la revendication 1 dans lequel le polymère non réticulé est mélangé mécaniquement avec l'agent de réticulation, pressé et chauffé.

13. Procédé selon la revendication 1 dans lequel le polymère non réticulé est moulé et mis en contact avec une solution de l'agent de réticulation dans un solvant inerte.

14. Procédé selon la revendication 13 dans lequel la densité de réticulation est contrôlée par le temps d'immersion dans le solvant, la température du solvant, ou la concentration d'agent de réticulation dans le solvant.

15. Procédé selon la revendication 13 dans laquelle le solvant comprend les hydrocarbures aromatiques, les hydrocarbures et éthers aliphatiques partiellement ou totalement halogénés, le THF, les éthers alkyliques des mono-, di- tri- et tétraéthylène glycols (les glymes), les alkylamides tertiaires incluant le DMF, N-méthylpyrrolidone, tétraméthylurée et ses analogues cycliques, N-alkylimidazoles, tétraalkylsulfamides, et leurs mélanges.

16. Procédé selon la revendication 2 dans lequel le polymère non réticulé est moulé et mis en contact avec l'agent de réticulation et un agent ionogène non réticulant pour former les groupements de bout -SO₃⁻(M⁺), ou -[SO₂YSO₂R]⁻(M⁺), R étant un radical organique tel que défini précédemment, préférablement halogéné, particulièrement perfluoré.

17. Procédé selon la revendication 16 dans lequel le polymère non réticulé est moulé et mis en contact de façon séquentielle ou simultanément avec l'agent de réticulation et l'agent ionogène non réticulant.

18. Procédé selon la revendication 16 dans lequel l'agent ionogène non réticulant comprend (CH₃)₃SiO⁻(M⁺) ou [(CH₃)₃SiNSO₂CR_{F}]⁻(M⁺) dans lequel M⁺ est tel que défini précédemment et R_{F} est un radical alkyle, oxaalkyle, azaalkyle ou thiaalkyle essentiellement perfluoré de 1 à 12 atomes de carbone.

19. Procédé selon la revendication 1 dans lequel un agent de renforcement est ajouté au polymère avant la réticulation.

## Claims

1. A method for cross-linking sulfonyl groups of a sulfonated polymer wherein at least a fraction of the cross-linking bonds bear an ionic charge, the process comprising contacting the polymer with the cross-linking agent allowing the reaction between two sulfonyl groups from adjacent polymeric chains, to form the said cross-linking bonds, wherein said cross-linking agent is an organometallic compound or a compound of formula
(M⁺)A₂Y⁻;
(M⁺)AY⁻SO₂(QSO₂)Y⁻A(M⁺);
wherein
- Y is N or CR wherein R comprises H, CN, F, SO₂R³, a substituted or non-substituted C₁₋₂₀ alkyl group ; a substituted or non-substituted C₁₋₂₀ aryl group ; a substituted or non-substituted C₁₋₂₀ alkylene group ; the substituent being selected from halogens and SO₂R;
- R³ comprises F, a substituted or non-substituted C₁₋₂₀ alkyl group; a substituted or non-substituted C₁₋₂₀ arylgroup; a substituted or non-substituted C₁₋₂₀ alkylene group, wherein the substituent comprises one or more halogens;
- M⁺ comprises an inorganic or an organic cation;
- Q represents a divalent C₁₋₂₀ alkyl, C₁₋₂₀ oxaalkyl, C₁₋₂₀ azaalkyl, C₁₋₂₀ thiaalkyl, C₁₋₂₀ aryl or C₁₋₂₀ alkylaryl group, each being optionally substituted by one or more halogens;
- r is 0 or 1; and
- A comprises M, Si(R')₃, Ge(R')₃, or Sn(R')₃, wherein R' is a C₁₋₁₈ alkyl.

2. A method according to claim 1 wherein the cross-linking bonds are of the type:
P-SO₂-Y⁻(M⁺)-SO₂-P' or
P-SO₂(M⁺)Y⁻SO₂-(Q-SO₂)rY⁻(M⁺)SO₂-P'
wherein :
- P and P' are the same or different and are part of a polymeric chain;
- Y is N or CR wherein R comprises H, CN, F, SO₂R³, a substituted or non-substituted C₁₋₂₀ alkyl group ; a substituted or non-substituted C₁₋₂₀ aryl group ; substituted or non-substituted C₁₋₂₀ alkylene group ; the substituent being selected from halogens and SO₂R;
- R³ comprises F, a substituted or non-substituted C₁₋₂₀ alkyl group; a substituted or non-substituted C₁₋₂₀ aryl group; a substituted or non-substituted C₁₋₂₀ alkylene group, wherein the substituent comprises one or more halogens;
- M⁺ comprises an inorganic or an organic cation;
- Q represents a divalent C₁₋₂₀ alkyl, C₁₋₂₀ oxaalkyl, C₁₋₂₀ azaalkyl, C₁₋₂₀ thiaalkyl, C₁₋₂₀ aryl or C₁₋₂₀ alkylaryl group, each being optionally substituted by one or more halogens;
- r is 0 or 1.

3. The method according to claim 2 wherein M⁺ comprises the proton, a metal cation, an organometallic cation or an organic cation optionally substituted with one or more organic radicals comprising:
- a proton, alkyl, alkenyl, oxaalkyl, oxaalkenyl, azaalkyl, azaalkenyl, thiaalkyl, thiaalkenyl, dialkylazo, silaalkyl groups optionally hydrolysable, silaalkenyl groups optionally hydrolysable, each being straight, branched or cyclic and comprising from 1 to 18 carbon atoms;
- cyclic or heterocyclic aliphatic radicals comprising from 4 to 26 carbon atoms optionally comprising at least one side chain comprising one or more heteroatoms such as nitrogen, oxygen or sulfur;
- aryl, arylalkyl, alkylaryl and alkenylaryl groups of from 5 to 26 carbon atoms optionally comprising one or more heteroatoms in the aromatic nucleus or in a substituent.

4. The method according the claim 3 wherein the metal comprises an alkaline metal, an alkaline-earth metal, a rare earth or a transition metal; the organic metallic cation comprises metallocenium, an arene-metallocenium, an alkylsilyl, an alkylgermanyl or an alkyltin, and the organic cation comprises R"O⁺ (onium), NR"⁺ (ammonium), R"C(NHR")₂⁺ (amidinium), C(NHR")₃⁺ (guanidinium), C₅R"N⁺ (pyridinium), C₃R"N₂⁺ (imidazolium), C₂R"N₃⁺ (triazolium), C₃R"N₂⁺ (imidazolinium), SR"⁺ (sulfonium), PR"⁺ (phosphonium), IR"⁺ (iodonium), (C₆R")₃C⁺ (carbonium), wherein R" is defined as an organic radical as defined above, and when an organic cation comprises at least two radicals R" different from H, these radicals can form together a cycle, aromatic or not, optionally containing the center bearing the cationic charge.

5. The method according to claim 2 wherein the divalent radical and the sulfonated polymer are partially or completely fluorinated.

6. The method according to claim 1, wherein a leaving group is linked to the sulfonyl groups before performing the cross-linking.

7. The method according to claim 6 wherein the leaving group comprises F, Cl, Br, an electrophilic heterocycle N-imidazolyl, N-triazolyl, R²SO₃, R² being an organic radical optionally halogenated, the organic radical comprising:
- a proton, alkyl, alkenyl, oxaalkyl, oxaalkenyl, azaalkyl, azaalkenyl, thiaalkyl, thiaalkenyl, dialkylazo, silaalkyl groups optionally hydrolysable, silaalkenyl groups optionally hydrolysable, each being straight, branched or cyclic and comprising from 1 to 18 carbon atoms;
- cyclic or heterocyclic aliphatic radicals comprising from 4 to 26 carbon atoms optionally comprising at least one side chain comprising one or more heteroatoms such as nitrogen, oxygen or sulfur;
- aryl, arylalkyl, alkylaryl and alkenylaryl groups of from 5 to 26 carbon atoms optionally comprising one or more heteroatoms in the aromatic nucleus or in a substituent.

8. The method according to claim 2 wherein the cross-linking agent comprises an organometallic comprising organo-lithium, organo-magnesium, magnesium or organo-aluminium.

9. The method according to claim 8 wherein A comprises a trialkylsilyl group.

10. The method according to claim 1 wherein the cross-linking agent comprises Li₃N; C₃Al₄; [(CH₃)₃Si]₂NLi (or Na or K); NH₃ + 3 DABCO; CF₃SO₂C[(CH₃)₃Si][Li(TMEDA)]₂; (CH₃)₃CNH₂ + 3 TEA; NH₂SO₂NH₂ + 4 TEA; [[(CH₃)₃Si](Li)N]₂SO₂; [(TMEDA)(Mg)N]₂SO₂; CH₃Li; (CH₃)₃Al; NH₂Li (or Na or K); [[Si(CH₃)₃](Li)NSO₂]₂CF₂; [Li[Si(CH₃)₃]NSO₂CF₂]₂CF₂; [(Li)Si(CH₃)₃NSO₂CF₂]; [Li[Sl(CH₃)₃]NSO₂CF₂CF₂]₂O; SO₂Cl₂ + 3 DABCO; SO₂(imidazole)₂; [FSO₂CF₂]₂ + 3 TEA; (ClSO₂CF₂)CF₂ + 3 DABCO and (FSO₂CF₂CF₁) ₂O + 3 DABCO.

11. The method according to claim 1 wherein the non cross-linked polymer is molded before being cross-linked.

12. The method according to claim 1 wherein the non cross-linked polymer is mechanically blended with the cross-linking agent, pressed and heated.

13. The method according to claim 1 wherein the non cross-linked polymer is molded and contacted with a solution of the cross-linking agent in an inert solvent.

14. The method according to claim 13 wherein the cross-linking density is controlled by the time of immersion in the solvent, the temperature of the solvent, or the cross-linking agent concentration in the solvent.

15. The method according to claim 13 wherein the solvent comprises aromatic hydrocarbons, hydrocarbons and aliphatic ethers partially or completely halogenated, THF, alkylethers of mono-, di- tri- and tetraethylene glycols (glymes), tertiary alkylamides including DMF, N-methylpyrrolidone, tetramethylurea and its cycling analogues, N-alkylimidazoles, tetraalkylsulfamides, and mixture thereof.

16. The method according to claim 2 wherein the non cross-linked polymer is molded and contacted with the cross-linking agent and a non cross-linking ionogene agent to form end groups -SO₃⁻(M⁺), or -[SO₂YSO₂R]⁻(M⁺), R being an organic radical as defined above, preferably halogenated, and particularly perfluorinated.

17. The method according to claim 16 wherein the non cross-linked polymer is molded and contacted sequentially or simultaneously with the cross-linking agent and the non cross-linking ionogene agent.

18. The method according to claim 16 wherein the non cross-linking ionogene agent comprises (CH₃)₃SiO⁻(M⁺) or [(CH₃)₃SiNSO₂CR_{F}]⁻(M⁺) wherein M⁺ is as defined above and R_{F} is an alkyl, oxaalkyl, azaalkyl or thiaalkyl radical essentially perfluorinated and comprising from 1 to 12 carbon atoms.

19. The method according to claim 1 wherein a reinforcing agent is added to the polymer before the cross-linking.

## Patentansprüche

1. Verfahren zum Vernetzen der Sulfonylgruppen eines sulfonierten Polymers, wobei zumindest ein Teil der Vernetzungsverbindungen eine ionische Ladung aufweist und das Verfahren das Kontaktieren des Polymers mit einem Vernetzungsmittel umfasst, das die Reaktion zwischen 2 Sulfonylgruppen von nebeneinander liegenden Polymerketten ermöglicht, um die Vernetzungsverbindungen zu bilden, wobei das Vernetzungsmittel ein Organometall oder eine Verbindung der folgenden allgemeinen Formel ist:
(M⁺)A₂Y⁻;
(M⁺)AY⁻SO₂(Q-SO₂)ᵣY⁻A(M⁺),
worin
- Y N oder CR ist, worin R für H, CN, F, SO₂R³, substituiertes oder unsubstituiertes C₁₋₂₀-Alkyl, substituiertes oder unsubstituiertes C₁₋₂₀-Aryl oder substituiertes oder unsubstituiertes C₁₋₂₀-Alkylen steht, wobei der Substituent aus Halogenen und SO₂R ausgewählt ist;
- R³ F, substituiertes oder unsubstituiertes C₁₋₂₀-Alkyl, substituiertes oder unsubstituiertes C₁₋₂₀-Aryl oder substituiertes oder unsubstituiertes C₁₋₂₀-Alkylen ist, worin der Substituent ein oder mehrere Halogene umfasst;
- M⁺ ein anorganisches oder organisches Kation ist;
- Q für einen zweiwertigen C₁₋₂₀-Alkyl-, C₁₋₂₀-Oxaalkyl-, C₁₋₂₀-Azaalkyl-, C₁₋₂₀-Thiaalkyl-, C₁₋₂₀-Aryl- oder C₁₋₂₀-Alkylaryl-Rest steht, die jeweils gegebenenfalls mit einem oder mehreren Halogenen substituiert sind;
- r = 0 oder 1 ist;
- und A M, Si(R')₃, Ge(R')₃ oder Sn(R')₃ ist, worin R' C₁₋₁₈-Alkyl ist.

2. Verfahren nach Anspruch 1, worin die Vernetzungsverbindungen vom folgenden Typ sind:
P-SO₂-Y⁻(M⁺)-SO₂-P' oder
P-SO₂(M⁺)Y⁻SO₂-(Q-SO₂)ᵣY⁻(M⁺)SO₂-P',
worin
- P und P' gleich oder verschieden sind und Teil einer Polymerkette sind;
- Y N oder CR ist, worin R für H, CN, F, SO₂R³, substituiertes oder unsubstituiertes C₁₋₂₀-Alkyl, substituiertes oder unsubstituiertes C₁₋₂₀-Aryl oder substituiertes oder unsubstituiertes C₁₋₂₀-Alkylen steht, wobei der Substituent aus Halogenen und SO₂R ausgewählt ist;
- R³ R, substituiertes oder unsubstituiertes C₁₋₂₀-Alkyl, substituiertes oder unsubstituiertes C₁₋₂₀-Aryl oder substituiertes oder unsubstituiertes C₁₋₂₀-Alkylen ist, worin der Substituent ein oder mehrere Halogene umfasst;
- M⁺ ein anorganisches oder organisches Kation ist;
- Q für einen zweiwertigen C₁₋₂₀-Alkyl-, C₁₋₂₀-Oxaalkyl-, C₁₋₂₀-Azaalkyl-, C₁₋₂₀-Thiaalkyl-, C₁₋₂₀-Aryl- oder C₁₋₂₀-Alkylaryl-Rest steht, die jeweils gegebenenfalls mit einem oder mehreren Halogenen substituiert sind;
- r = 0 oder 1 ist.

3. Verfahren nach Anspruch 2, worin M⁺ ein Proton, ein Metallkation, ein organometallisches Kation oder ein organisches Kation ist, das gegebenenfalls mit einem oder mehreren organischen Resten substituiert ist, die folgende umfassen:
- das Proton, Alkyl-, Alkenyl-, Oxaalkyl-, Oxaalkylen-, Azaalkyl-, Azaalkenyl-, Thiaalkyl-, Thiaalkenyl-, Dialkylazo-, gegebenenfalls hydrolysierbare Silaalkyl- und gegebenenfalls hydrolysierbare Silaalkenylreste, wobei die Reste unverzweigt, verzweigt oder zyklisch sein können und 1 bis 18 Kohlenstoffatome umfassen;
- zyklische oder heterozyklische aliphatische Reste mit 4 bis 26 Kohlenstoffatomen, die gegebenenfalls zumindest eine Seitenkette mit einem oder mehreren Heteroatomen, wie z.B. Stickstoff, Sauerstoff oder Schwefel, umfassen;
- Aryle, Arylalkyle, Alkylaryle und Alkenylaryle mit 5 bis 26 Kohlenstoffatomen, die gegebenenfalls ein oder mehrere Heteroatome im aromatischen Kern oder in einem Substituenten umfassen.

4. Verfahren nach Anspruch 3, worin das Metall ein Alkalimetall, ein Erdalkalimetall ein Seltenerdmetall oder ein Übergangsmetall ist; das organometallische Kation ein Metallocen, ein Arenmetallocen, ein Alkylsilyl, ein Alkylgermanyl oder ein Alkylzinn umfasst; und das organische Kation eine R"O⁺- (Onium-), NR"⁺- (Ammonium-), R"C(NHR")₂⁺- (Amidinium-), C(NHR")₃⁺- (Guanidinium-), C₅R"N⁺- (Pyridinium-), C₃R"N₂⁺- (Imidazolium-), C₂R"N₃⁺- (Triazolium-), C₂R"N₂⁺- (Imidazolinium-), SR"⁺-(Sulfonium-), PR"⁺- (Phosphonium-), IR"⁺- (lodonium-) oder (C₆R")₃C⁺- (Carbonium-) Gruppe ist, worin R" ein organischer Rest wie zuvor definiert ist, und, wenn ein organisches Kation zumindest zwei in Bezug auf H unterschiedliche R"-Reste umfasst, diese Reste gemeinsam einen aromatischen oder nichtaromatischen Ring bilden können, wobei sie gegebenenfalls das Zentrum umfassen, das die kationische Ladung trägt.

5. Verfahren nach Anspruch 2, worin der zweiwertige Rest und das sulfonierte Polymer teilweise oder vollständig fluoriert sind.

6. Verfahren nach Anspruch 1, worin vor der Vernetzung eine labile Gruppe an die Sulfonylgruppen gebunden wird.

7. Verfahren nach Anspruch 6, worin die labile Gruppe F, Cl, Br, ein heterozyklisches, elektrophiles N-Imidazolyl, N-Triazolyl oder R²SO₃ umfasst, wobei R² ein gegebenenfalls halogenierter organischer Rest ist, wobei der organische Rest folgende umfasst:
- das Proton, Alkyl-, Alkenyl-, Oxaalkyl-, Oxaalkylen-, Azaalkyl-, Azaalkenyl-, Thiaalkyl-, Thiaalkenyl-, Dialkylazo-, gegebenenfalls hydrolysierbare Silaalkyl- und gegebenenfalls hydrolysierbare Silaalkenylreste, wobei die Reste unverzweigt, verzweigt oder zyklisch sein können und 1 bis 18 Kohlenstoffatome umfassen;
- zyklische oder heterozyklische aliphatische Reste mit 4 bis 26 Kohlenstoffatomen, die gegebenenfalls zumindest eine Seitenkette mit einem oder mehreren Heteroatomen, wie z.B. Stickstoff, Sauerstoff oder Schwefel, umfassen;
- Aryle, Arylalkyle, Alkylaryle und Alkenylaryle mit 5 bis 26 Kohlenstoffatomen, die gegebenenfalls ein oder mehrere Heteroatome im aromatischen Kern oder in einem Substituenten umfassen.

8. Verfahren nach Anspruch 2, worin das Vernetzungsmittel ein Organometall umfasst, das Organolithium, Organomagnesium oder Organoaluminium umfasst.

9. Verfahren nach Anspruch 8, worin A eine Trialkylsilylgruppe umfasst.

10. Verfahren nach Anspruch 1, worin das Vernetzungsmittel Folgendes umfasst: Li₃N; C₃Al₄; [(CH₃)₃Si]₂NLi (oder -Na oder -K); NH₃ + 3 DABCO; CF₃SO₂C[(CH₃)₃S₁]-[Li(TMEDA)]₂; (CH₃)₃CNH₂ + 3 TEA; NH₂SO₂NH₂ + 4 TEA; [[(CH₃)₃Si](Li)N]₂SO₂; [(TMEDA)(Mg)N]₂SO₂; CH₃Li; (CH₃)₃Al; NH₂Li (oder -Na oder -K); [[Si(CH₃)₃](Li)N-SO₂]₂CF₂; [Li[Si(CH₃)₃]NSO₂CF₂]₂CF₂; [(Li)Si(CH₃)₃NSO₂CF₂]₂; [Li[Si(CH₃)₃]NSO₂-CF₂CF₂]₂O; SO₂Cl₂ + 3 DABCO; SO₂(Imidazol)₂; [FSO₂CF₂]₂ + 3 TEA; (ClSO₂CF₂)-CF₂ + 3 DABCO; und (FSO₂CF₂CF₁)₂O + 3 DABCO.

11. Verfahren nach Anspruch 1, worin das unvernetzte Polymer vor der Vernetzung geformt wird.

12. Verfahren nach Anspruch 1, worin das unvernetzte Polymer mit dem Vernetzungsmittel mechanisch vermischt, gepresst und erhitzt wird.

13. Verfahren nach Anspruch 1, worin das unvernetzte Polymer geformt und mit einer Lösung des Vernetzungsmittels in einem inerten Lösungsmittel kontaktiert wird.

14. Verfahren nach Anspruch 13, worin die Vernetzungsdichte durch die Dauer des Eintauchens in das Lösungsmittel, die Lösungsmitteltemperatur oder die Konzentration des Vernetzungsmittels im Lösungsmittel gesteuert wird.

15. Verfahren nach Anspruch 13, worin das Lösungsmittel aromatische Kohlenwasserstoffe, teilweise oder vollständig halogenierte aliphatische Kohlenwasserstoffe und Ether, THF, Alkylether von Mono-, Di-, Tri- und Tetraethylenglykolen (Glymen), tertiäre Alkylamide, einschließlich DMF, N-Methylpyrrolidon, Tetramethylharnstoff und dessen zyklische Analoga, N-Alkylimidazole, Tetraalkylsulfamide und Gemische davon umfasst.

16. Verfahren nach Anspruch 2, worin das unvernetzte Polymer geformt und mit dem Vernetzungsmittel und einem nicht vernetzenden ionogenen Mittel kontaktiert wird, um endständige Gruppen -SO3⁻(M⁺) oder -[SO₂YSO₂R]⁻(M⁺) zu bilden, wobei R ein wie zuvor definierter organischer, vorzugsweise halogenierter und besonders bevorzugt perfluorierter, Rest ist.

17. Verfahren nach Anspruch 16, worin das unvernetzte Polymer geformt und nacheinander oder gleichzeitig mit dem Vernetzungsmittel und dem nicht vernetzenden ionogenen Mittel kontaktiert wird.

18. Verfahren nach Anspruch 16, worin das nicht vernetzende ionogene Mittel (CH₃)₃SiO⁻(M⁺) oder [(CH₃)₃SiNSO₂CR_{F}]⁻(M⁺) umfasst, worin M⁺ wie oben definiert ist und R_{F} ein im Wesentlichen perfluorierter Alkyl-, Oxaalykl-, Azaalkyl- oder Thiaalkylrest mit 1 bis 12 Kohlenstoffatomen ist.

19. Verfahren nach Anspruch 1, worin vor der Vernetzung ein Verstärkungsmittel zum Polymer zugesetzt wird.
